Europäisches Patentamt

European Patent Office

Office européen des brevets

(19)

(11) Veröffentlichungsnummer : **0 057 270**
**B1**

## (12) EUROPÄISCHE PATENTSCHRIFT

(45) Veröffentlichungstag der Patentschrift :
**25.07.84**

(21) Anmeldenummer : **81109455.6**

(22) Anmeldetag : **31.10.81**

(51) Int. Cl.³ : **B 60 J   5/04**

(54) **Tür, insbesondere für ein Kraftfahrzeug.**

(30) Priorität : **24.01.81 DE 3102329**

(43) Veröffentlichungstag der Anmeldung :
**11.08.82 Patentblatt 82/32**

(45) Bekanntmachung des Hinweises auf die Patenterteilung : **25.07.84 Patentblatt 84/30**

(84) Benannte Vertragsstaaten :
**FR GB IT**

(56) Entgegenhaltungen :
**BE-A-   555 636**
**DE-A- 2 045 875**
**FR-A- 2 207 039**
**FR-A- 2 220 998**
**US-A- 2 128 260**
**US-A- 3 829 149**

(73) Patentinhaber : **Messerschmitt-Bölkow-Blohm GmbH**
**Robert-Koch-Strasse**
**D-8012 Ottobrunn (DE)**

(72) Erfinder : **Engelsberger, Ernst, Ing. grad.**
**Preysingstrasse 34**
**D-8019 Glonn (DE)**
Erfinder : **Schulz, Ralf-Thilo, Dipl.-Ing.**
**Ödenstockacher Strasse 3**
**D-8011 Putzbrunn (DE)**
Erfinder : **Drachenberg, Franz, Ing. grad.**
**Brunnenstrasse 61**
**D-8011 Baldham (DE)**

## Beschreibung

Die Erfindung betrifft eine Tür der im Oberbegriff des Anspruchs 1 beschriebenen Gattung.

Eine derartige Tür, beispielsweise gemäß der DE-AS 14 80 089 mit einer etwa Y- oder V-förmigen Trägeranordnung als Türmittelteil, hat u. a. den Vorteil, daß das Türinnen- und Türaußenteil aus Kunststoff als reine nichttragende Verkleidungsteile ausgebildet werden können. Das bringt eine erhebliche Gewichtseinsparung, führt aber zwangsläufig auch zu einer Minderung der Türstärke. Daher wird diese Tür nicht ohne weiteres die Forderung nach größtmöglicher Minderung des bei einem seitlichen Aufprall durch Verformung entstehenden (Personen-) Sicherheitsrisikos erfüllen können.

Es sind zwar z. B. aus FR-A-2 220 998 und US-A-3 829 149 an sich Stoßenergieabsorbtionskörper bei KFZ-Türen bekannt, die sich zwischen Türschloß und Scharnier erstrecken. Jedoch stellen diese keine Träger für nichttragende Türaußen- und Türinnenverkleidungen dar.

Der Erfindung liegt daher die Aufgabe zugrunde, den Verformungswiderstand der eingangs genannten Tür zu erhöhen, ohne auf den Vorteil einer Kunststoff- und somit Leichtbauweise verzichten zu müssen.

Diese Aufgabe ist gemäß dem Kennzeichen des Anspruchs 1 gelöst, wonach das Türmittelteil nicht bloß in der Form eines doppelwandigen (Zwischen-) Wandungsbauteils der Tür Steifigkeitskriterien erfüllt, sondern zugleich (überwiegend) in der Form eines Sandwichbauteils einen energieabsorbierenden Stoßfänger bildet. Hierbei ist im Rahmen der Forderung nach kompakter Bauweise durch die Wahl von Hartschaum für den Kern als Bettung des, beispielsweise nach einer bevorzugten Ausführungsform der Erfindung in Form einer in der Türebene sich erstreckenden Wellprofilplatte ausgebildeten, Energieabsorptionskörpers ein größtmögliches Energieabsorptionsvermögen des Türmittelteiles sichergestellt. Denn unter einem Aufprall der Tür wird der Hartschaumstoffkern dem Formänderungsbestreben (der Längung) des Energieabsorptionskörpers entgegenwirken und somit den energieabsorbierenden Effekt noch erhöhen.

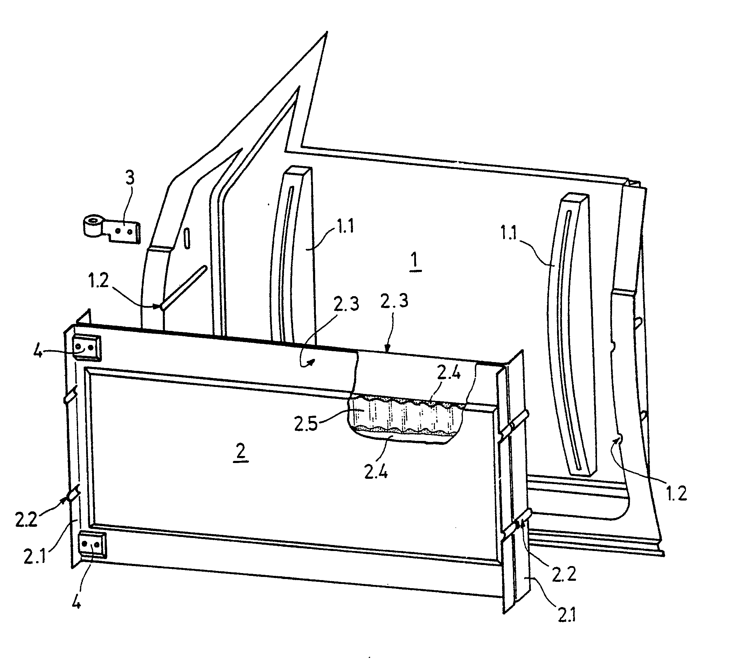

Durch das nachfolgende Ausführungsbeispiel der Erfindung wird im übrigen verdeutlicht, daß dieser sowie ihren in den Unteransprüchen gekennzeichneten Weiterbildungen eine erhebliche Bedeutung im Rahmen der Forderung nach einer faserverbundwerkstoffgerechten Türstruktur zukommt. Hierbei zeigt die Zeichnung in Explosionsdarstellung einer vorderen Seitentür eines Personenkraftfahrzeugs bloß ein Türinnenteil 1 und ein Türmittelteil 2 (teilweise aufgebrochen), auf welchem beispielsweise ein Türaußenteil als bloße Metallhaut aufgebördelt werden kann. Zugleich ist das Türmittelteil 2 Träger des Türinnenteils 1, welches als Innenverkleidung gestaltet ist und mit Laufschienen 1.1 für Scheiben und dgl. versehen sein kann ; das Türinnenteil kann ein Kunststoffwarmformteil sein, erforderlichenfalls mit einer (Glas-) Fasergewebeverstärkung.

Schließlich als einziges selbsttragendes Bauteil und somit als Träger der beiden vorgenannten Türteile ist das Türmittelteil 2 in Form einer in das Türinnenteil 1 einschiebbaren Platte ausgebildet, wozu an deren beiden vertikalen Längsrändern angeformte Laschen 2.1 mit Wülsten 2.2 in Nuten 1.2 des Türinnenteils 1 zum Eingriff kommen. Um die zusammengesetzten Teile 1 und 2 gegen ein Verschieben (zueinander) zu sichern, brauchen Türscharniere 3 bloß in Scharniertaschen 4 des Türmittelteils 2 eingeführt zu werden, welches dann zwischen den (z. B. verschraubten) Türscharnieren und dem gegenüberliegenden (nicht dargestellten) Türschloß eine direkte schub- und torsionssteife Verbindung herstellt. Einerseits zu diesem Zweck ist das Türmittelteil 2 aus zwei Schalen 2.3 zusammengesetzt, welche vorzugsweise aus (Glas-) Fasergewebe mit einer kreuzweisen Faserorientierung von ± 45° in einer Kunstharzmatrix bestehen. Andererseits bilden diese beiden Schalen 2.3 die Umhüllung eines Hartschaumstoffkerns 2.4 z. B. aus Polyurethan, in welchen eine Wellprofilplatte 2.5 als (Stoß-) Energieabsorptionskörper eingebettet ist ; ob nur eine oder beide Schalen die dargestellte wannenartige Ausbauchung aufweisen, wird von der jeweils gewählten Dicke des Hartschaumstoffkernes bzw. Höhe der Wellung abhängen. Die Wellprofilplatte 2.5 besteht ebenfalls aus einem Kunststoff bzw. Kunstharz mit einer Fasergewebeverstärkung, aber vorzugsweise mit einer Faserorientierung von 0/90° bezogen auf die Erstreckungsrichtung der Wellung. Die Schalen 2.3 sind mit dem Hartschaumstoffkern 2.4 beispielsweise verklebt.

Auf der Basis der Wellprofilplatte 2.5 in Verbindung mit (bzw. in Umhüllung von) dem Hartschaumstoffkern 2.4 ist in dessen Bereich das Türmittelteil 2 ein energieabsorbierender Stoßfänger für den Fall eines Aufpralles der Tür (sog. Crash). Dann kommt es je nach Stärke des Stoßes nach anfänglicher Durchbiegung des Türmittelteils 2 zu einem Bruch seiner Schalen 2.3, u. U. an einer hierin durch einen Schlitz o. dgl. vorgebbaren Sollbruchstelle, mit der Folge einer Längung der Wellprofilplatte 2.5 unter Zerbröselung des Hartschaumstoffkernes 2.4. Somit wird mittels des Türmittelteils 2 durch zwei verschiedene irreversible Verformungsvorgänge « Längung » und « Zerbröselung » Stoßenergie absorbiert.

Die Tür gemäß der Erfindung ist damit ein wesentlicher Beitrag, Personenkraftfahrzeug-Karosseriebauteile aus Gründen der Kraftstoffersparnis leichter zu bauen, ohne ein größeres Sicherheitsrisiko für die Insassen eingehen zu müssen.

## Ansprüche

1. Zusammengesetzte Tür, insbesondere für ein Kraftfahrzeug, bei der ein zwischen Türscharnieren und Türschloß sich erstreckendes tragendes Türmittelteil aus Kunststoff der Träger eines nichttragenden Türinnen- und Türaußenteils ist, dadurch gekennzeichnet, daß das Türmittelteil (2) ein schub- und torsionssteifer, in der Türebene großflächiger Verbundkunststoffkörper ist mit einem von zwei Schalen (2.3) umschlossenen Hartschaumstoffkern (2.4), in den zumindest ein (Stoß-) Energieabsorptionskörper (2.5) eingebettet ist.

2. Tür nach Anspruch 1, dadurch gekennzeichnet, daß der Energieabsorptionskörper eine in der Türebene sich erstreckende Wellprofilplatte (2.5) ist.

3. Tür nach Anspruch 1 und 2, dadurch gekennzeichnet, daß die beiden Schalen (2.3) und die Wellprofilplatte (2.5) aus faserverstärktem Kunststoff, insbesondere aus Fasergewebe in einer Kunstharzmatrix bestehen.

4. Tür nach Anspruch 3, dadurch gekennzeichnet, daß die beiden Schalen (2.3) eine kreuzweise Faserorientierung von ± 45° aufweisen, dagegen die Wellprofilplatte (2.5) eine kreuzweise Faserorientierung von 0/90°.

5. Tür nach Anspruch 1, dadurch gekennzeichnet, daß das Türmittelteil (2) als eine an den beiden vertikalen Längsrändern in das Türinnenteil (1) einschiebbare Platte ausgebildet ist.

6. Tür nach Anspruch 5, dadurch gekennzeichnet, daß zwischen Türmittel- und Türinnenteil (2 bzw. 1) Nut/Federverbindungen (1.2/2.2) bestehen.

## Claims

1. An assembled door, more particularly for a motor vehicle, in which a load-bearing door centre part, extending between the door hinges and the door lock and made of plastics material, is the support of a non-load-bearing door inner part and door outer part, characterised in that the door centre part (2) is a shear- and torsion-resistant composite plastics-material body, of large area in the plane of the door, with a hard foam material core (2.4) which is enclosed by two shells (2.3) and into which at least one (impact) energy absorption body (2.5) is embedded.

2. A door according to claim 1, characterised in that the energy absorption body is a corrugated profile plate (2.5) which extends in the plane of the door.

3. A door according to claim 1 and 2, characterised in that the two shells (2.3) and the corrugated profile plate (2.5) consist of fibre-reinforced plastics material, more particularly of fibre fabric in a synthetic resin matrix.

4. A door according to claim 3, characterised in that the two shells (2.3) have a crosswise fibre orientation of ± 45°, whereas the corrugated profile plate (2.5) has a crosswise fibre orientation of 0/90°.

5. A door according to claim 1, characterised in that the door centre part (2) is designed as a plate which can be inserted at the two vertical longitudinal edges into the door inner part (1).

6. A door according to claim 5, characterised in that groove-and-tongue joints (1.2/2.2) exist between the door centre part and the door inner part (2 or 1 respectively).

## Revendications

1. Porte composée, en particulier pour un véhicule automobile, dans laquelle une partie portante médiane en matière plastique s'étendant entre les charnières et la serrure de la porte constitue le support des parties intérieure et extérieure non portantes de la porte, caractérisée par le fait que la partie médiane (2) de la porte est un corps en matière plastique composite, résistant au cisaillement et à la torsion, et à grande surface dans le plan de la porte, comportant un noyau (2.4) en mousse rigide entouré par deux coques (2.3) et dans lequel est noyé au moins un corps (2.5) absorbant l'énergie (chocs).

2. Porte selon la revendication 1, caractérisée par le fait que le corps absorbant l'énergie est une plaque profilée ondulée (2.5) s'étendant dans le plan de la porte.

3. Porte selon les revendications 1 et 2, caractérisée par le fait que les deux coques (2.3) et la plaque profilée ondulée (2.5) sont réalisées en matière plastique renforcée de fibres, en particulier en tissu de fibres dans une matrice de résine synthétique.

4. Porte selon la revendication 3, caractérisée par le fait que les deux coques (2.3) présentent une orientation de fibres croisées de ± 45° et que par contre la plaque profilée ondulée (2.5) présente une orientation de fibres croisées de 0/90°.

5. Porte selon la revendication 1, caractérisée par le fait que la partie médiane (2) de la porte est réalisée sous la forme d'une plaque pouvant être insérée le long des deux bords longitudinaux verticaux dans la partie intérieure (1) de la porte.

6. Porte selon la revendication 5, caractérisée par le fait que des assemblages à fausse languette (1.2/2.2) sont prévues entre les parties médianes et intérieures (2 et 1) de la porte.